# EUROPEAN PATENT SPECIFICATION

(11) **EP 2 539 230 B1**
(45) Date of publication and mention of the grant of the patent: **25.06.2014**
(21) Application number: 11705504.6
(22) Date of filing: 18.02.2011
(51) Int. Cl.: B65B 19/34, B65B 51/22, B65B 9/20, B29C 65/08

(54) **PACKAGING MACHINE FOR LONG PASTA OR THE LIKES WITH ULTRASOUND LONGITUDINAL WELDING GROUP**
VERPACKUNGSMASCHINE FÜR LANGE PASTA ODER DERGLEICHEN MIT EINER ULTRASCHALL-LÄNGSSCHWEISSGRUPPE
MACHINE D'EMBALLAGE POUR PÂTES LONGUES, OU AUTRES, AVEC GROUPE DE SOUDAGE LONGITUDINAL À ULTRASONS

(30) Priority: 26.02.2010 IT MI20100316
(43) Date of publication of application: 02.01.2013
(73) Proprietor: Altopack S.P.A., 55011 Altopascio (LU) (IT)
(72) Inventor: BADIANI, Luca, 59100 Prato (IT); CAMBI, Marco, 51100 Pistoia (IT)
(74) Representative: Mittler, Enrico
(86) International application number: PCT/EP2011/052391
(87) International publication number: WO 2011/104168

(56) References cited:
- WO-A1-2008/059352
- US-A- 3 319 984
- US-B2- 6 574 944

## Description

The present invention relates to a packaging machine for long pasta or the likes with an ultrasound longitudinal welding group.

Packaging machines for long pasta are known (see US-6574944) that provide for inserting the pasta horizontally inside an envelope that is being formed, which consists of a plastic film fed in a horizontal path in which, once a dose of pasta has been received, the lateral edges thereof are folded progressively downwards and are then approached to one another below the pasta until a closed envelope is formed around the pasta. The closure of the envelope is made permanent by reciprocal longitudinal sealing of the two edges at the end of the folding and approaching operation.

Welding is usually performed by welding groups that use the heat generated by an electric current that travels along opposite electric wires (called "welding electrodes") of two parts of the welding group through which the two approached edges of the film are passed.

A tubular envelope is thus formed that is further closed and cut in front of the dose of pasta by a welding and transverse cutting group that performs two transverse welds separated by a cut, using again usually the heat generated by an electric current that travels along two pairs of parallel electric wires and with the further assistance of a cutting blade interposed between the two pairs of electric wires.

The use of ultrasound welding groups that use an ultrasound generator connected to an electrode known as a "sonotrode" that cooperates with a fixed abutment known as an "anvil" to perform reciprocal welding of interposed films of plastic is currently in the development stage.

The object of the present invention is to exploit ultrasound technology to make a packaging machine for long pasta with advantageous structural and functional features.

According to the present invention, a packaging machine for pasta is thus proposed that comprises means for feeding a continuous film of plastic, folding means for folding lateral edges of said film to form a tubular envelope with a horizontal path with lateral edges folded downwards and approached to one another, introducing means for introducing a succession of doses of pasta or the like inside said tubular envelope, a longitudinal welding group inserted into said horizontal path to carry out reciprocal welding of said edges of folded and approached film and a transverse welding group arranged downstream of said longitudinal welding group to perform transverse welding and cutting of said tubular envelope to separate the tubular envelope into a succession of closed envelopes that are separated from one another, characterized in that said longitudinal welding group comprises an ultrasound welding device formed by a torsional sonotrode supplied by an ultrasound generator and passed through by a channel opened above for the passage of said folded and approached film edges and by a contrast anvil housed in said channel of the sonotrode.

Following the generation of ultrasound, the torsional sonotrode is subjected to a succession of torsional vibrations around an axis that is perpendicular to the advancing direction of the film in such a manner as to cause a temporal succession of contacts between the sonotrode and the anvil for reciprocal welding of the two edges of interposed film.

The features of the present invention will be made clear by the following detailed description of a preferred embodiment thereof shown by way of example in the attached drawings, in which:
figure 1 shows a raised schematic view of an example of packaging machine for long pasta according to the present invention;
figure 2 shows schematically in cross-section the conformation of the film filled with pasta and with edges that have been folded but not yet reciprocally approached before the passage through the longitudinal welding group;
figure 3 shows schematically in cross-section the conformation of the film filled with pasta and with folded and approached edges at the inlet of the longitudinal welding group;
figure 4 shows a perspective overall view of the ultrasound longitudinal welding group that is part of said packaging machine;
figure 5 shows a plan view of the aforesaid ultrasound longitudinal welding group;
figure 6 shows a plan view of the ultrasound welding device comprised in said ultrasound longitudinal welding group;
figure 7 shows a perspective view of said ultrasound welding device with a schematic view of the film with folded and approached edges on which longitudinal welding of the edges is performed;
figure 8 shows another perspective view of the aforesaid ultrasound welding device;
figure 9 shows a similar perspective view of the ultrasound welding device devoid of the contrast anvil and of the corresponding supporting group;
figure 10 shows an overall plan view of figure 9;
figure 11 shows an overall view of figure 10 sectioned along line XI-XI;
figure 12 shows a similar perspective view of the anvil and of the corresponding supporting group;
figure 13 shows an overall partially sectioned plan view of figure 12.

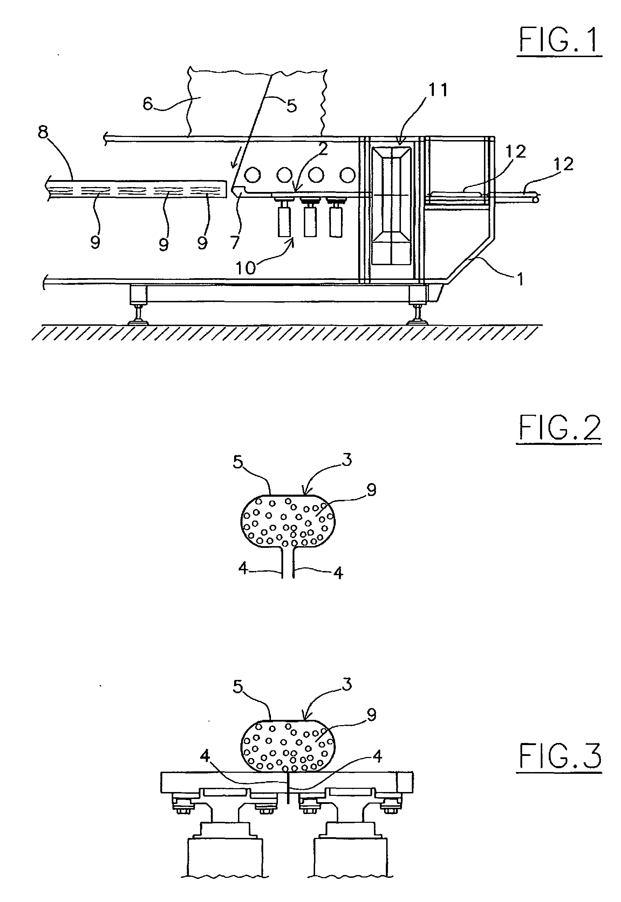

In figure 1 there is shown a packaging machine for long pasta that comprises a base frame 1 along which a horizontal path 2 for a tubular envelope 3 (figure 2) extends that is formed by folding downwards and mutually approaching lateral edges 4 of a film of plastic 5 that is initially fed in a flat shape by a feeder 6 (schematised only in figure 1) and then transformed into a tubular shape by a forming switch 7.

A pasta feeder 8 introduces longitudinally a succession of doses 9 of long pasta (or the like) inside the aforesaid tubular envelope 3.

Along said horizontal path 2, downstream of the forming switch 7, an ultrasound longitudinal welding group 10 is placed that longitudinally welds edges of folded and approached film 4 for lower closing of the tubular envelope 3.

Downstream of the longitudinal welding group 10, a transverse ultrasound welding group 11 is then placed that performs transverse welds and cuts of said tubular envelope 3 to separate said tubular envelope 3 into a succession of single closed envelopes 12 that are separated from one another.

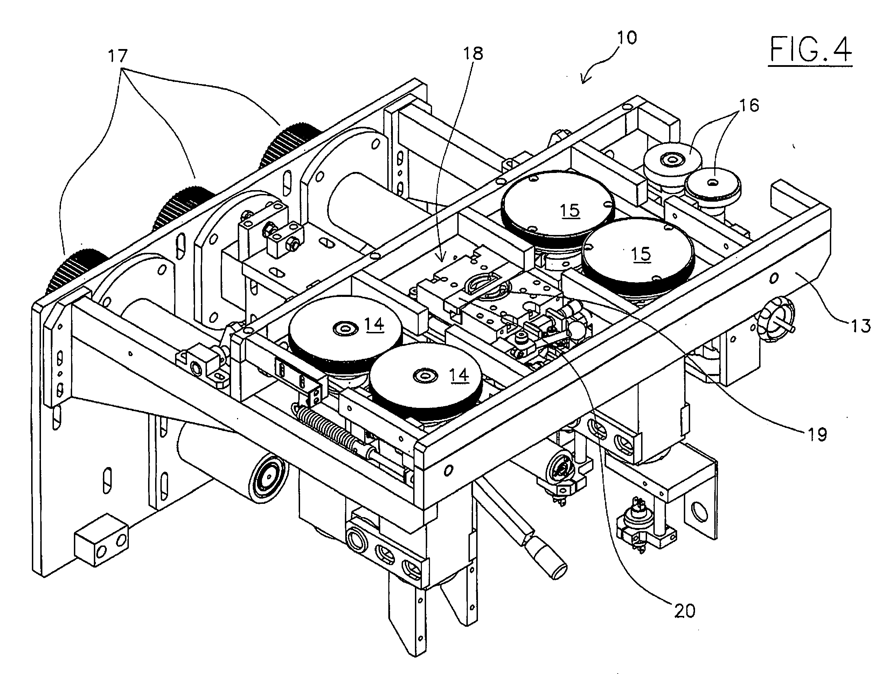

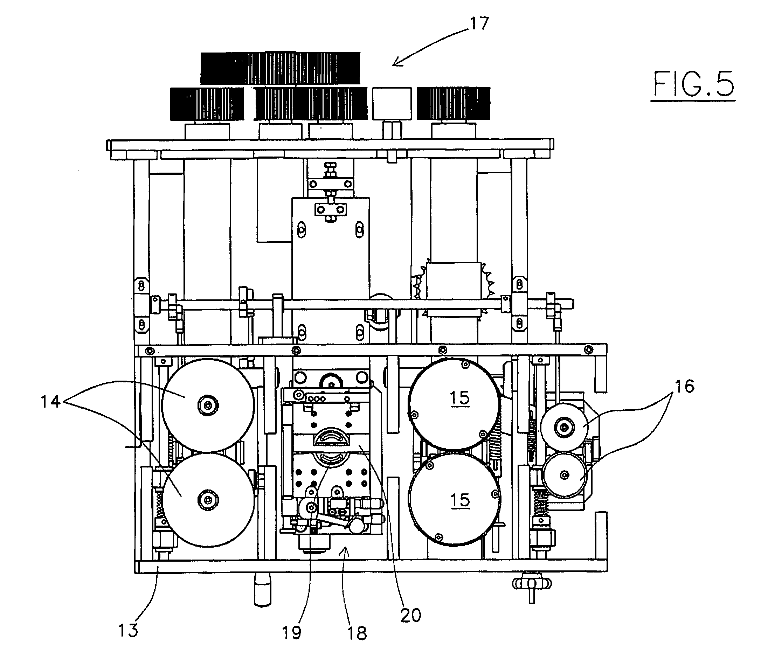

The horizontal welding group 10 is shown in greater detail in figures 4 and 5, where it is seen to comprise a base frame 13, two pairs of dragging rollers 14 and 15 between which the folded and approached film edges 3 engage, respectively before and after the longitudinal welding operation, a pair of outlet rollers 16 to accompany the welded edges 3 after longitudinal welding, a motor group 17 for driving the pairs of rollers 14, 15 and 16, and an ultrasound longitudinal welding device 18 interposed between the two pairs of rollers 14 and 15.

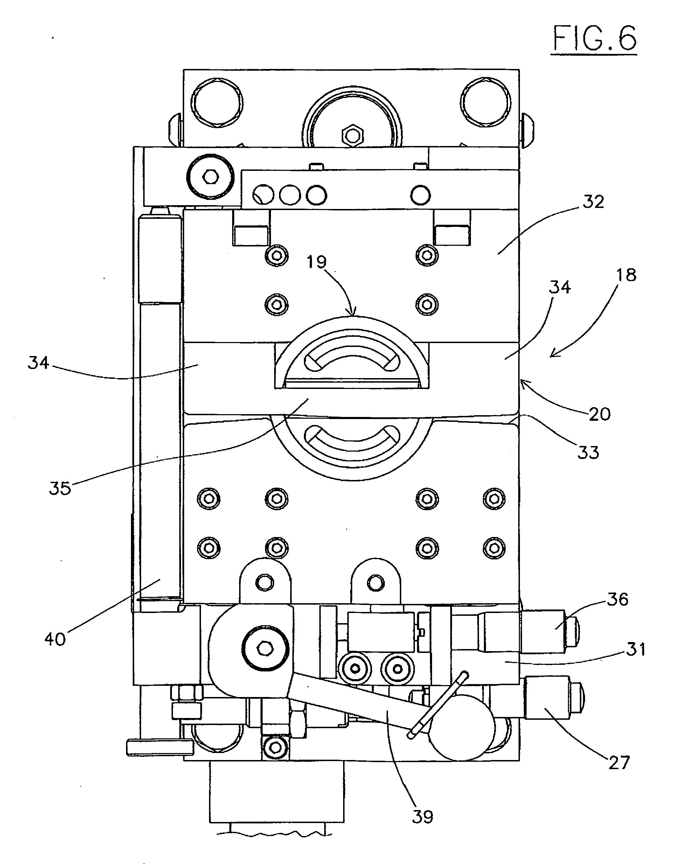

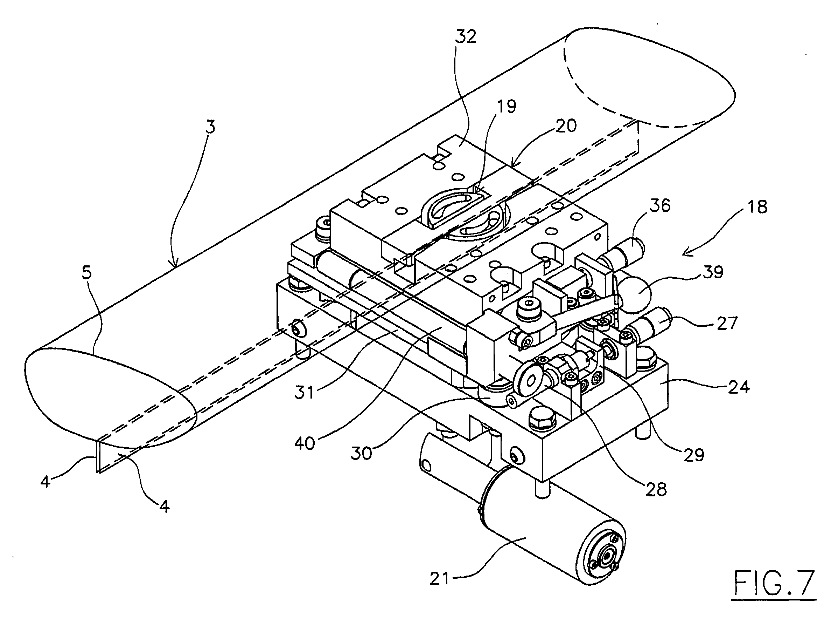

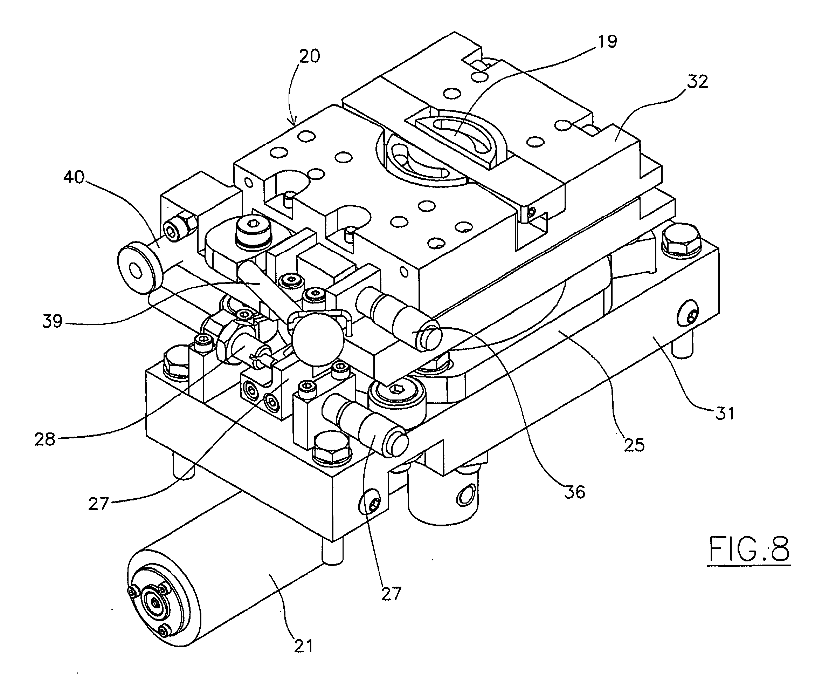

The welding device 18, shown in greater detail in figures 6-13, substantially comprises a torsional sonotrode 19 and a contrast anvil 20.

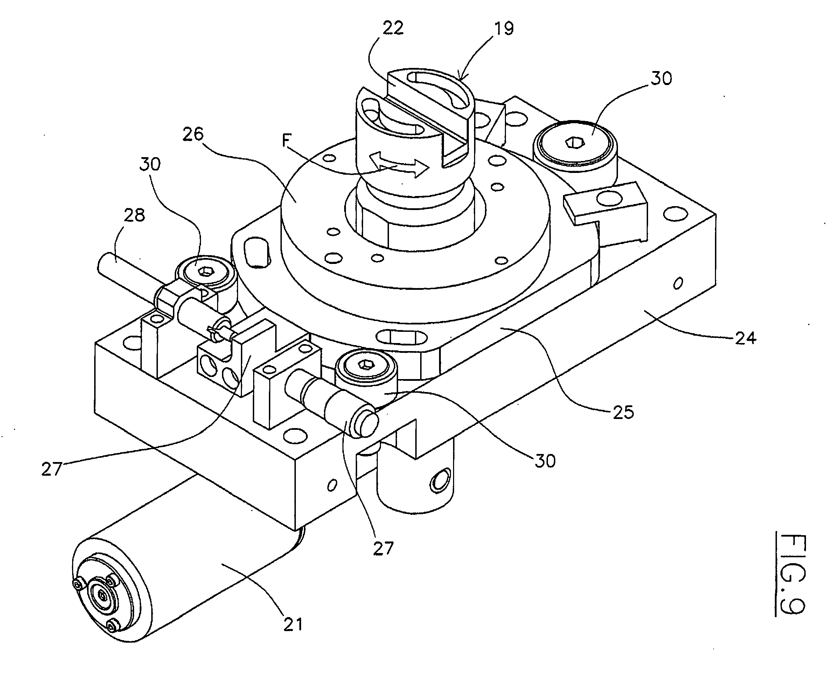

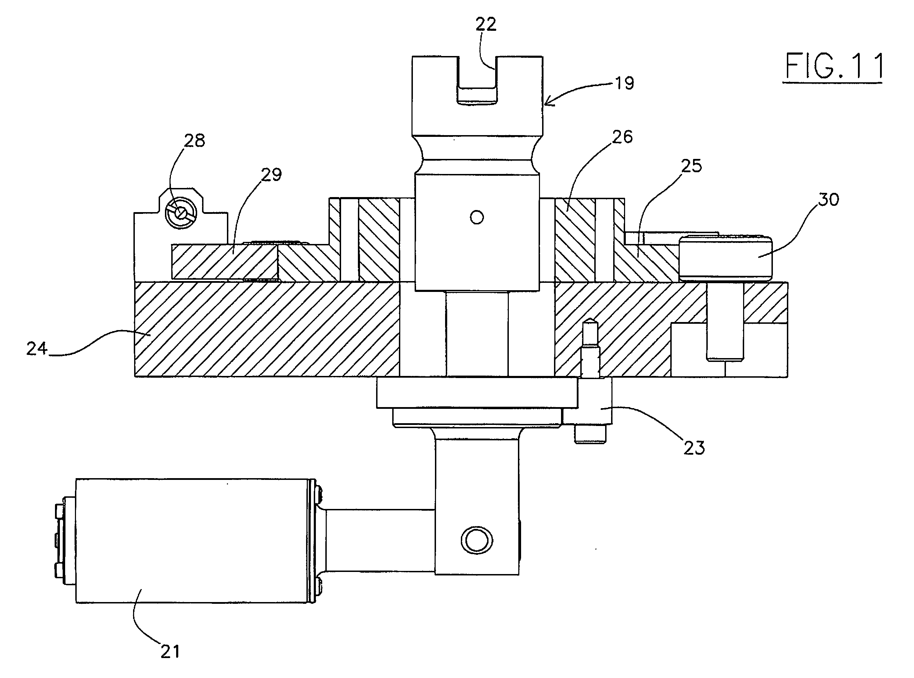

The torsional sonotrode 19 is supplied by an ultrasound generator 21 (fig. 11), which determines torsional vibrations around the vertical axis of the sonotrode in the two directions of the arrow F of figure 9. As is visible in figures 9-11, the upper end of the sonotrode 19 is cylindrical in shape and is passed through by a channel 22 that is open upwards, through which the two film edges 4 to be welded together are passed.

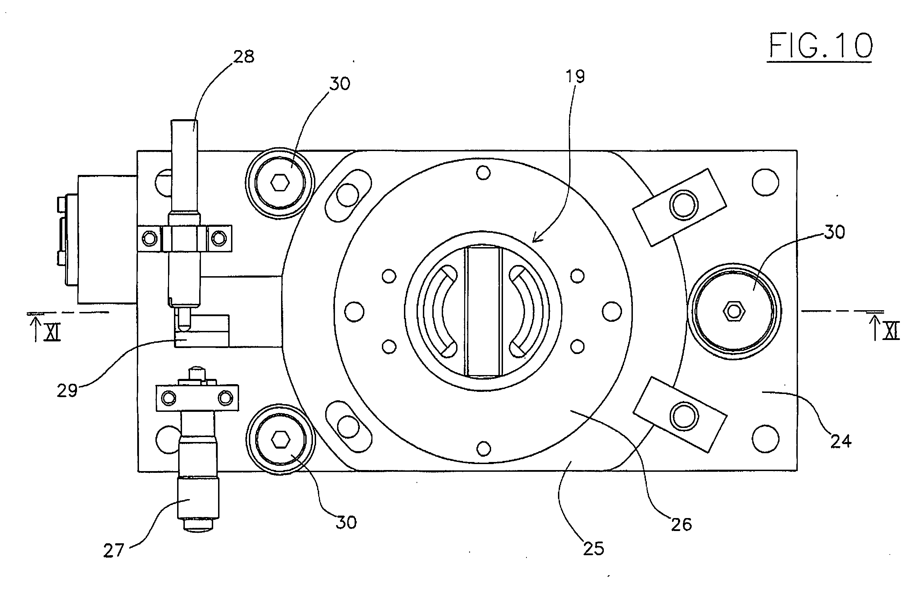

The sonotrode 19 is fixed by a clamp 23 (fig. 11) and vertically passes through a fixed lower plate 24 and an upper plate 25 with a collar 26 above, that is adjustable angularly owing to a regulating micrometer 27 and to a locking screw 28 (figures 9 and 10) that act on opposite sides on an angular panel 29 that is integral with the plate 24. The rotation of the plate 24 is guided by idling rollers 30.

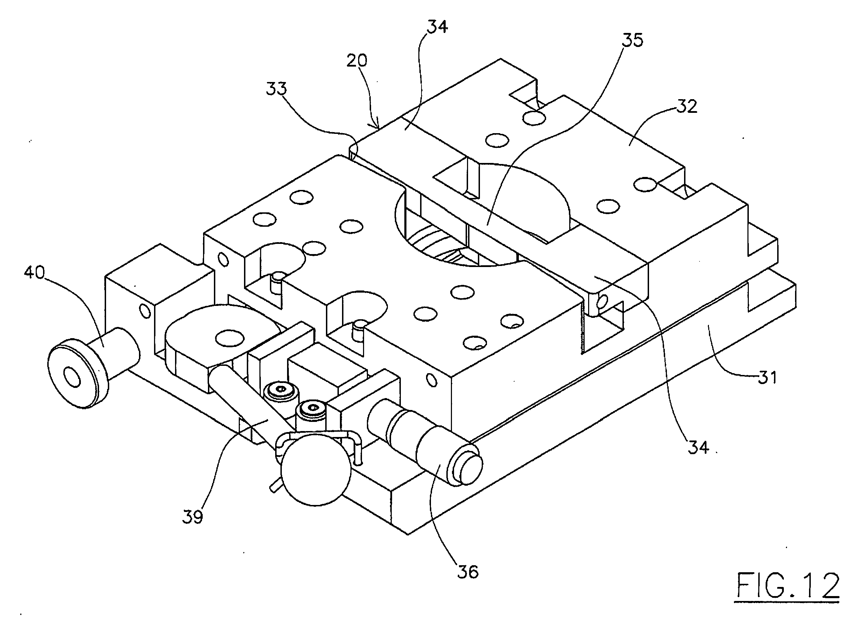

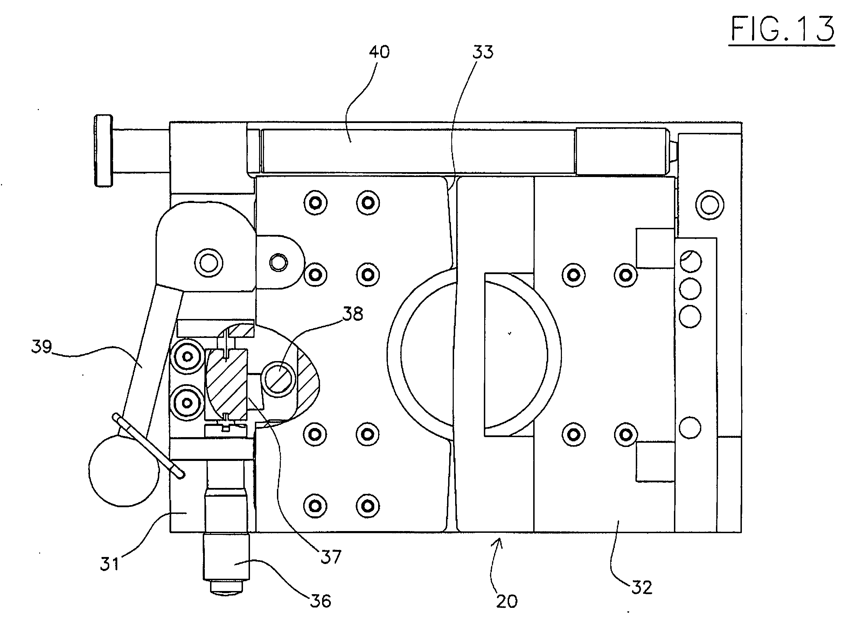

The sonotrode 19 further passes vertically through a further plate 31 fixed to the collar 25 and a superimposed plate 32 provided with an upper channel 33 that is aligned with the channel 22 of the sonotrode 19 and is slightly flared at the ends. In the channel 33 the anvil 20 is housed and fixed that is substantially C-shaped with two widened ends 34 and a central neck 35 housed in the channel 22 of the sonotrode 19 (figures 6-8 and 12-13). The position of the upper plate 32 with respect to the lower plate 31 is adjustable by means of an adjusting micrometer 36 (fig. 12) that acts on a wedge element 37 (fig. 13) engaged variably with a column 38 fixed to the plate 32. An opening lever 39 is also provided that contrasts the elastic action of a spring 40 (figures 6, 7, 12 and 13).

In operation, once the necessary adjustments by means of micrometers 27 and 36 have been performed and the two edges 4 of the film 5 have been inserted into the passage defined between the channel 22 of the sonotrode 22 and the anvil 20, the packaging machine is started up to cause the film 5 to advance and the doses of pasta 9 to be inserted inside the tubular envelope 3 formed by the forming switch 7 and the ultrasound generator 21 is activated in such a manner as to generate a torsional vibration of the sonotrode 19. This torsional vibration causes longitudinal welding of the two edges 4 that are mutually approached by the lower closing of the tubular envelope 3, which is then divided by the subsequent transverse welding group 11 into single envelopes 12 that are closed and separated from one another.

## Claims

1. Packaging machine for pasta, comprising means (6) for feeding a continuous film (5) of plastic material, means (7) for folding the lateral edges (4) of said film (5) to form a horizontal path tubular envelope (3) with lateral edges (4) folded downwards and approached to each other, means (8) for introducing a succession of doses (9) of pasta or the like inside said tubular envelope (3), a longitudinal welding group (10) included in said horizontal path for welding said folded and approached film edges (4) with each other and a transversal welding group (11) arranged downstream to said longitudinal welding group (10) for transversally welding and cutting said tubular envelope (3) for dividing the same envelope into a succession of closed envelopes (12) separated from each other, **characterized in that** said longitudinal welding group (10) comprises a ultrasound welding device (18) formed by a torsional sonotrode (19) supplied by an ultrasound generator (21) and passed through by a channel (22) which is open upwards for the passage of said folded and approached film edges (4) and by a contrast anvil (20) housed in said channel (22) of the sonotrode (19).

2. Machine according to claim 1, **characterized by** comprising means (27) for adjusting the angular position of said channel (22) of the sonotrode (19).

3. Machine according to claim 1 or 2, **characterized by** comprising means (36) for adjusting the position of said anvil (20) with respect to said channel (22) of the sonotrode (19).

4. Machine according to anyone of claims 1 to 3, **characterized in that** said transversal welding group (11) is of the ultrasound type.

## Patentansprüche

1. Vorrichtung (1) zum Transportieren von Behältern für biologische Produkte von einer Schnittstellenlagerung (30) zu einer Transportvorrichtung (40) und umgekehrt für in verschiedenen Höhen angeordnete biologische Behälter, aufweisend
einen Rahmen (2), mit welchem eine Haltevorrichtung (3) für Behälter für biologische Produkte bezüglich des Rahmens (2) vertikal beweglich verbunden ist und wobei diese mit Fingern (6) versehen ist, welche zum Halten, Transportieren und Loslassen eines Behälters für biologische Produkte geeignet sind, wobei der Rahmen (2) integral mit Gleitmitteln (7, 18) entlang eines Balkens, der an einem neigbaren Körper (9) befestigt ist, ausgebildet ist, wobei der neigbare Körper (9) wiederum drehbar mit einem Unterstützungskörper (10) verbunden ist, und
Regulierungsmittel (23, 24, 26, 27) für die Neigung des neigbaren Körpers (9), und konsequenterweise des Balkens (8), **dadurch gekennzeichnet, dass**
das Regulierungsmittel für die Neigung des neigbaren Körpers (9) bezüglich des Unterstützungskörpers (10) eine Regulierungsschraube (23) aufweist, welche an ein erstes Kopplungsmittel (24) gekoppelt ist, das drehbar mit dem neigbaren Körper (9) verbunden ist, und an ein zweites Kopplungsmittel (26), das drehbar mit dem Unterstützungskörper (10) verbunden ist, wobei die Kopplungsmittel (24, 26) Rotationsachsen vorsehen, welche parallel zueinander und parallel zu der Rotationsachse des neigbaren Körpers (9) bezüglich des Unterstützungskörpers (10) sind, wobei die Regulierungsschraube (23) eine Rotationsachse vorsieht, welche orthogonal zu den Rotationsachsen der Kopplungsmittel (24, 26) sind, wobei sich die Kopplungsmittel (24, 26) wechselseitig in Abhängigkeit von der Rotationsrichtung der Regulierungsschraube (23) bewegen.

2. Vorrichtung (1) gemäß Anspruch 1, **dadurch gekennzeichnet, dass** der neigbare Körper (9) mittels eines Drehstifts (15) als auch in den neigbaren Körper (9) eingeschraubten Spannschrauben (14a, 14b, 14c), welche mit auf dem Unterstützungskörper (10) vorgesehenen Schlitzen (13a, 13b, 13c) ineinander greifen, an den Unterstützungskörper (10) gekoppelt ist.

3. Vorrichtung (1) gemäß Anspruch 2, **dadurch gekennzeichnet, dass** diese eine Vielzahl von Schlitzen (13a, 13b, 13c) vorsieht, deren Länge zunimmt, wenn der Abstand zum Drehstift (15) zunimmt.

4. Vorrichtung (1) gemäß Anspruch 2 oder 3, **dadurch gekennzeichnet, dass** der Drehstift (15) einen Abschnitt ohne Gewinde in der Nähe des Kopfes und einen Abschnitt mit Gewinde zum Einschrauben in den neigbaren Körper (9) aufweist.

## Revendications

1. Equipement (1) pour transférer des contenants de produits biologiques d'un support d'interface (30) vers un dispositif de transport (40) et vice-versa pour des contenants biologiques, positionnés à différentes hauteurs, comprenant un cadre (2) auquel un dispositif de maintien (3) pour des contenants de produits biologiques est relié, mobile verticalement par rapport au dit cadre (2) et pourvu de doigts (6) appropriés pour maintenir, transférer et libérer un contenant pour des produits biologiques,
ledit cadre (2) étant d'un seul tenant avec des moyens de coulissement (7, 18) le long d'une barre fixée à un corps inclinable (9), ledit corps inclinable (9) étant à son tour relié en rotation à un corps de soutien (10), et des moyens de régulation (23, 24, 26, 27) pour l'inclinaison dudit corps inclinable (9), et en conséquence de ladite barre (8),
**caractérisé en ce que** lesdits moyens de régulation de l'inclinaison dudit corps inclinable (9) par rapport au dit corps de soutien (10) comprennent une vis de régulation (23) accouplée à des premiers moyens d'accouplement (24) associés en rotation au dit corps inclinable (9) et à des deuxièmes moyens d'accouplement (26) associés en rotation au dit corps de soutien (10), lesdits moyens d'accouplement (24, 26) fournissant des axes de rotation parallèles entre eux et parallèles à l'axe de rotation du corps inclinable (9) par rapport au corps de soutien (10), ladite vis de régulation (23) fournissant un axe de rotation orthogonal aux dits axes de rotation des moyens d'accouplement (24, 26), lesdits moyens d'accouplement (24, 26) se déplaçant en va-et-vient en fonction de la direction de rotation de la vis de régulation (23).

2. Equipement (1) selon la revendication 1, **caractérisé en ce que** le corps inclinable (9) est accouplé au dit corps de soutien (10) au moyen d'une broche de rotation (15), ainsi que de vis de serrage (14a, 14b, 14c) vissées sur le corps inclinable (9) en prise avec des fentes (13a, 13b, 13c) obtenues sur le corps de soutien (10).

3. Equipement (1) selon la revendication 2, **caractérisé en ce qu'**il comporte une pluralité de fentes (13a, 13b, 13c) dont les longueurs augmentent alors que la distance par rapport à la broche de rotation (15) augmente.

4. Equipement (1) selon la revendication 2 ou 3, **caractérisé en ce que** la broche de rotation (15) comporte une partie non filetée à proximité de la tête et une partie filetée qui est vissée sur le corps inclinable (9).
